# DEMANDE DE BREVET EUROPEEN

(11) **EP 4 145 825 A1**
(43) Date de publication de la demande: **08.03.2023**
(21) Numéro de dépôt: 22201303.9
(22) Date de dépôt: 13.10.2009
(51) Int. Cl.: H04N 19/103, H04N 19/147, H04N 19/174, H04N 19/176, H04N 19/33, H04N 19/46, H04N 19/593, H04N 19/61, H04N 19/70

(54) **PROCÉDÉ ET DISPOSITIF DE CODAGE D'UNE SÉQUENCE D'IMAGE METTANT EN UVRE DES BLOCS DE TAILLE DIFFÉRENTE, SIGNAL, SUPPORT DE DONNÉES, PROCÉDÉ ET DISPOSITIF DE DÉCODAGE, ET PROGRAMMES D ORDINATEUR CORRESPONDANTS**

(30) Priorité: 15.10.2008 FR 0856973
(62) Demande divisionnaire de: 09756014.8
(71) Demandeur: Orange, 92130 Issy-les-Moulineaux (FR)
(72) Inventeur: CAMMAS, Nathalie, 35490 Sens de Bretagne (FR); PATEUX, Stéphane, 35700 Rennes (FR); AMONOU, Isabelle, 35235 Thorigne Fouillard (FR); KERVADEC, Sylvain, 35490 Sens de Bretagne (FR)
(74) Mandataire: Vidon Brevets & Stratégie

(57) **Abrégé**

L'invention concerne un procédé de décodage d'un signal représentatif d'une séquence d'images, une image étant découpée en tranches subdivisées en blocs de taille standard, dits macroblocs, ledit signal comprenant des informations de codage de base associées à au moins un grand bloc permettant de reconstruire une couche de base d'une image courante, un grand bloc correspondant à un groupe de macroblocs. Selon l'invention, le procédé effectue les étapes suivantes :
- décodage d'un indicateur positionné dans un en-tête d'une tranche de ladite image,
- lecture (71) d'informations de codage de base associées à un grand bloc de ladite tranche ;
- décodage (72) desdites informations et reconstruction dudit grand bloc ;
- en fonction d'une valeur de l'indicateur décodé, décodage (73) d'informations de rehaussement contenues dans ledit signal et associées à au moins un macrobloc présent dans ledit grand bloc, et raffinement dudit au moins un macrobloc.

## Description

### 1. Domaine de l'invention

Le domaine de l'invention est celui du codage et du décodage d'un flux vidéo, constitué d'une série d'images successives. Plus précisément, l'invention s'applique à la compression d'images ou de séquences d'images utilisant des transformées par bloc.

L'invention peut notamment s'appliquer au codage vidéo mis en œuvre dans les codeurs vidéo actuels (MPEG, H.264, etc) ou à venir (H.265).

### 2. Art antérieur

On connaît déjà de nombreuses techniques de compression de données vidéo. Parmi celles-ci, de nombreuses techniques de codages vidéo utilisent une représentation par bloc de la séquence vidéo, comme par exemple celles mettant en œuvre les standards de compression vidéo issus de l'organisation MPEG (MPEG-1, MPEG-2, MPEG-4 part 2, ...) ou de l'ITU-T (H.261, ..., H.264/AVC). Ainsi, selon la technique H.264, chaque image peut être découpée en tranches (en anglais « slice »), elles-mêmes découpées en macroblocs, qui sont ensuite subdivisés en blocs. Un bloc est constitué d'un ensemble de pixels. Selon le standard H.264, un macrobloc est un bloc carré de taille égale à 16×16 pixels, qui peut être redécoupé en blocs de taille 8x8, 16x8 ou 8×16, les blocs 8x8 pouvant ensuite être redécoupés en blocs de taille 4x4, 8x4 ou 4x8.

Selon les techniques connues, les macroblocs ou les blocs peuvent être codés par prédiction intra-images ou inter-images. En d'autres termes, un macrobloc ou bloc peut être codé par :
- une prédiction temporelle, c'est-à-dire en référence à un bloc ou macrobloc de référence appartenant à une ou plusieurs autres images ; et/ou
- une prédiction dite « spatiale », en fonction des blocs ou macroblocs voisins de l'image courante.

Dans ce dernier cas, la prédiction ne peut être effectuée qu'à partir des blocs qui ont été précédemment codés.

Plus précisément, selon la technique H.264, des images I sont codées par prédiction spatiale (prédiction intra), et des images P et B sont codées par prédiction temporelle par rapport à d'autres images I, P ou B codées/décodées à l'aide d'une compensation en mouvement.

Pour coder ces images, celles-ci sont découpées en blocs. Pour chaque bloc est codé un bloc résiduel, encore appelé résidu de prédiction, correspondant au bloc original diminué d'une prédiction. Les coefficients de ce bloc sont quantifiés après une éventuelle transformation, puis codés par un codeur entropique.

Selon la technique H.264 par exemple, on code pour chaque bloc :
- le type de codage (prédiction intra, prédiction inter, pas de prédiction en anglais « skip ») ;
- le type de partitionnement ;
- les informations concernant la prédiction (orientation, image de référence, ...);
- les informations de mouvement si nécessaire ;
- les coefficients codés ;
- etc.

Le décodage est fait image par image, et pour chaque image, macrobloc par macrobloc. Pour chaque macrobloc, les éléments correspondants du flux sont lus. La quantification inverse et la transformation inverse des coefficients des blocs du macrobloc sont effectuées. Puis, la prédiction du macrobloc est calculée et le macrobloc est reconstruit en ajoutant la prédiction au résidu de prédiction décodé.

Avec l'arrivée de nouveaux formats vidéo haute résolution, la taille des blocs utilisés dans les standards de compression vidéo actuels n'est malheureusement plus adaptée au contenu des séquences vidéo à compresser.

De plus, les différents types de prédiction possibles dans le codeur A VC ne sont pas les mêmes selon la taille des blocs. Par exemple, en codage intra, il n'est pas possible de bénéficier d'autant de directions de prédiction pour un bloc de taille 16×16 que pour un bloc de taille 4x4. Or, l'utilisation de blocs de taille 4x4 pour coder une séquence haute résolution ne permet pas d'exploiter efficacement le signal à compresser, la quantité d'information contenue dans le bloc n'étant pas suffisamment représentative de la séquence haute résolution pour que le codage appliqué soit efficace en termes de coût débit/distorsion.

Par ailleurs, la taille maximale des blocs pour la prédiction est limitée à 16×16 dans les standards de compression vidéo actuels. Or l'utilisation de blocs de plus grande taille peut avoir un intérêt dans le cas de séquences haute résolution.

Le document « *Reduced Resolution Update Mode Extension to the H.264 Standard »* (A. Tourapis, J. Boyce) propose d'étendre la technique de codage dite « Reduced Resolution Update » ou RRU (en français « mise à jour avec réduction de la résolution ») à un codeur H.264.

Pour coder un bloc, la technique RRU effectue la prédiction et le calcul des résidus de prédiction du bloc à la résolution du bloc. Puis le bloc est sous-échantillonné. Les coefficients sous-échantillonnés sont transformés, quantifiés et codés par un codeur entropique. Au décodage, les coefficients sont décodés, la quantification et la transformation inverses sont effectuées, puis une étape de sur-échantillonnage des coefficients est appliquée afin de reconstruire le bloc à sa résolution initiale.

L'extension de cette technique RRU à un codeur H.264 consiste à appliquer la technique RRU à des blocs de taille MxN, avec M et N multiples de seize.

Ainsi, selon cette technique, tous les blocs de l'image ont la même taille MxN, qui n'est pas nécessairement bien adaptée au contenu de l'image.

### 3. Exposé de l'invention

L'invention propose une solution nouvelle qui ne présente pas l'ensemble de ces inconvénients de l'art antérieur, sous la forme d'un procédé de codage d'une séquence d'images, comprenant une étape de découpage d'une image courante en blocs de taille standard, dits macroblocs.

Selon l'invention, un tel procédé comprend, pour au moins un macrobloc courant de l'image courante, les étapes suivantes :
- construction d'au moins un bloc de taille supérieure audit macrobloc courant, dit grand bloc, comprenant ledit macrobloc courant et au moins un macrobloc voisin dans l'image courante, en tenant compte de caractéristiques de ladite image courante ;
- codage dudit grand bloc délivrant des informations de codage de base, permettant de reconstruire une couche de base de ladite image courante et
pour au moins un grand bloc, détermination d'informations de rehaussement associées à au moins un macrobloc présent dans ledit grand bloc, permettant de reconstruire une couche de rehaussement de ladite image courante.

L'invention propose ainsi une nouvelle technique de codage d'images, permettant d'adapter la taille des blocs à coder en tenant compte des caractéristiques de l'image à coder.

La taille du ou des blocs de taille supérieure peut être prédéfinie au codage, en fonction de la taille de l'image à coder (par exemple selon des recommandations définies par un standard, ou bien spécifiées en entête des données codées).

Pour un macrobloc courant de l'image courante, on construit alors un ou plusieurs grands blocs de taille supérieure au macrobloc courant, en tenant compte des conditions spécifiques au codeur. On sélectionne ensuite le bloc qui permet d'obtenir la meilleure représentation de base pour le macrobloc courant. Par exemple, cette sélection est effectuée en choisissant le bloc de taille supérieure permettant d'optimiser un critère débit/distorsion.

Plus précisément, le codage d'un grand bloc permet de calculer au décodage, grâce aux informations de codage de base, une valeur reconstruite (prédiction) pour tous les pixels de ce grand bloc, et donc pour les pixels du macrobloc courant présent dans le grand bloc. On entend ici par représentation de base l'ensemble de ces valeurs reconstruites pour le macrobloc courant.

Par exemple, la meilleure représentation de base est celle qui minimise l'équation *R* + λ*D*, avec *R* le débit associé au codage du résidu de prédiction et des informations de signalisation nécessaires pour le mode de prédiction en question, *D* la distorsion du grand bloc après reconstruction (ajout du résidu décodé à la prédiction), et λ un lagrangien pré-déterminé.

Par la suite, le choix de la taille du bloc à coder dans la représentation de base (i.e. macrobloc courant, ou bien bloc de taille supérieure), est également basé sur un critère débit-distorsion, par exemple. Pour la taille de bloc considérée, on définit la valeur du débit moyen par pixel *Rp* = *R*/*taille_bloc* et la distorsion moyenne par pixel *Dp*, et l'on associe au bloc considéré le lagrangien *Rp* + λ*Dp.* La taille de bloc retenue est alors celle correspondant au bloc testé ayant le plus faible lagrangien.

On code ensuite le grand bloc, de façon à obtenir des informations de codage de base pour ce grand bloc. Les informations de codage de base pour le grand bloc sont alors insérées dans un signal représentatif de l'image et/ou stockées. En utilisant la terminologie AVC, ces informations de codage de base permettent de reconstruire une couche de base de l'image, c'est-à-dire une version avec un premier niveau de qualité de l'image courante (représentation de base).

Pour au moins un grand bloc, il est ensuite possible de déterminer des informations de rehaussement associées à au moins un macrobloc présent dans le grand bloc. En utilisant la terminologie SVC, ces informations de rehaussement permettent de reconstruire une couche de rehaussement de l'image, c'est-à-dire une version de qualité supérieure de l'image courante.

Par exemple, ces informations de rehaussement comprennent des informations de texture et/ou de mouvement.

Les blocs de taille supérieure au macrobloc sont par exemple construits de façon à englober plusieurs macroblocs voisins horizontalement et/ou verticalement du macrobloc courant, correspondant à une région de l'image présentant des caractéristiques similaires, comme une même valeur de mouvement ou une texture homogène.

On parcourt ainsi l'image courante (ou une portion de l'image), macrobloc par macrobloc, selon un sens de parcours prédéterminé, et pour chaque nouveau macrobloc, on construit de nouveaux blocs de taille supérieure à ce macrobloc, et on cherche à déterminer si la meilleure représentation de base pour macrobloc courant est obtenue en codant le macrobloc directement, ou un des blocs de taille supérieure. Les sens de parcours sont par exemple le parcours ligne par ligne, généralement connu sous le terme « Raster Scan », ou le parcours en spirale (« Spiral Scan ») qui propose de parcourir un groupe de blocs à partir de son centre, en progressant vers les bords par un parcours en forme de spirale,

En particulier, le procédé selon l'invention comprend une étape préalable de vérification si le macrobloc courant a été précédemment codé via un grand bloc contenant le macrobloc courant, et en cas de vérification positive, de passage à un macrobloc suivant, selon un ordre de parcours prédéterminé.

En d'autres termes, lors du parcours de l'image macrobloc par macrobloc, il est possible de « sauter » (en anglais « skip ») un macrobloc, si des informations de codage de base ont déjà été déterminées pour ce macrobloc. Il est également possible de déterminer des informations de rehaussement pour ce macrobloc courant. Ainsi, si le macrobloc courant appartient à un grand bloc pour lequel on dispose déjà d'informations de codage de base, il n'est pas nécessaire de coder des informations de base pour ce macrobloc courant (le codage d'informations de rehaussement étant possible), et on peut passer au macrobloc suivant.

L'invention permet ainsi d'adapter la taille des blocs à l'image et au niveau de résolution désiré, en stockant et/ou en transmettant des informations de codage de base associées à un macrobloc pour des régions présentant des détails fins ou des informations de codage de base associées à un grand bloc pour des régions présentant des détails plus grossiers.

Selon un aspect particulier de l'invention, le procédé comprend une étape d'insertion, dans un signal représentatif de la séquence d'images, d'au moins un indicateur appartenant à un groupe comprenant :
- un indicateur signalant la présence d'au moins un grand bloc ;
- un indicateur signalant la présence d'informations de rehaussement associées à au moins un macrobloc présent dans ledit grand bloc.

Il est possible de cette façon de transmettre dans un signal présentant une unique couche, des informations de codage de base et des informations de rehaussement.

La syntaxe proposée permet de s'affranchir de l'utilisation d'un flux présentant une structure hiérarchique en couches de données, comme proposé selon la technique SVC.

En particulier, le procédé de codage comprend une étape d'insertion dans le signal, suivant un ordre de parcours prédéterminé des macroblocs dans l'image, des informations suivantes :
- informations de codage de base associées à au moins un macrobloc ;
- informations de codage de base associées à au moins un grand bloc ;
- informations de rehaussement associées à au moins un macrobloc présent dans un grand bloc.

Ainsi, pour certains macroblocs de l'image, la meilleure représentation de base est obtenue en codant individuellement le macrobloc, tandis que pour d'autres, la meilleure représentation de base est obtenue en codant un grand bloc comprenant le macrobloc.

Selon cet exemple de réalisation, le signal généré par le codeur et à destination d'un récepteur comprend à la fois des informations de codage de base associées à un ou plusieurs macroblocs codés individuellement, et des informations de codage de base associées à un ou plusieurs grands blocs.

Le signal comprend également des informations de rehaussement associées à un ou plusieurs macroblocs présents dans un grand bloc, et éventuellement à un ou plusieurs macroblocs pris individuellement.

Dans un autre mode de réalisation, l'invention concerne un dispositif de codage d'une séquence d'images, comprenant des moyens de découpage d'une image courante en blocs de taille standard, dits macroblocs.

Selon l'invention, un tel dispositif comprend, pour au moins un macrobloc courant de l'image courante :
- des moyens de construction d'au moins un bloc de taille supérieure au macrobloc courant, dit grand bloc, comprenant le macrobloc courant et au moins un macrobloc voisin dans l'image courante, en tenant compte de caractéristiques de ladite image courante ;
- des moyens de codage dudit grand bloc, délivrant des informations de codage de base, permettant de reconstruire une couche de base de ladite image courante, et
pour au moins un grand bloc, des moyens de détermination d'informations de rehaussement associées à au moins un macrobloc présent dans le grand bloc, permettant de reconstruire une couche de rehaussement de ladite image courante.

Un tel dispositif de codage est notamment adapté à mettre en œuvre le procédé de codage décrit précédemment. Il s'agit par exemple d'un codeur vidéo de type MPEG ou H.264, ou selon une future norme de compression vidéo.

Un autre aspect de l'invention concerne un signal représentatif d'une séquence d'images codées selon le procédé de codage décrit précédemment.

Un tel signal comprend :
- des informations de codage de base associées à au moins un grand bloc, permettant de reconstruire une couche de base de ladite image courante ; et
- des informations de rehaussement associées à au moins un macrobloc présent dans un desdits grands blocs, permettant de reconstruire une couche de rehaussement de ladite image courante.

Ce signal peut être transmis et/ou stocké sur un support de données.

Ce signal pourra bien sûr comporter les différentes caractéristiques relatives au procédé de codage selon l'invention.

En particulier, ce signal comprend au moins un indicateur appartenant à un groupe comprenant :
- un indicateur signalant la présence d'au moins un grand bloc ;
- un indicateur signalant la présence d'informations de rehaussement associées à au moins un macrobloc présent dans ledit grand bloc.

Encore un autre aspect de l'invention concerne un support de données comprenant au moins un signal représentatif d'une séquence d'images codées selon le procédé de codage décrit précédemment.

Un tel support comprend :
- des informations de codage de base associées à au moins un grand bloc, permettant de reconstruire une couche de base de ladite image courante ; et
- des informations de rehaussement associées à au moins un macrobloc présent dans un desdits grands blocs, permettant de reconstruire une couche de rehaussement de ladite image courante.

Il est notamment adapté à porter un signal tel que décrit précédemment.

Dans un autre mode de réalisation, l'invention concerne un procédé de décodage d'un signal représentatif d'une séquence d'images, une image étant découpée en blocs de taille standard, dits macroblocs,
ledit signal comprenant :
- des informations de codage de base associées à au moins un grand bloc permettant de reconstruire une couche de base d'une image courante, un grand bloc correspondant à un groupe de macroblocs construit en tenant compte de caractéristiques de ladite image courante ; et
- des informations de rehaussement associées à au moins un macrobloc présent dans un desdits grands blocs, permettant de reconstruire une couche de rehaussement de ladite image courante.

Selon l'invention, un tel procédé met en œuvre les étapes suivantes :
- lecture d'informations de codage de base associées à un grand bloc ;
- décodage des informations de codage de base et reconstruction du grand bloc ;
- décodage d'informations de rehaussement associées à au moins un macrobloc présent dans ledit grand bloc, si elles existent, et de raffinement dudit au moins un macrobloc.

De cette façon, la technique de décodage selon l'invention permet à réception et lecture des informations de codage de base, de reconstruire une région de l'image correspondant à un grand bloc, c'est-à-dire regroupant plusieurs macroblocs.

En particulier, le signal peut également porter des informations de codage de base associées à au moins un macrobloc.

Dans ce cas, le procédé de décodage met en œuvre des étapes de lecture des informations de codage de base associées à au moins un macrobloc, décodage des informations de codage de base associées à un macrobloc et reconstruction du macrobloc correspondant.

De cette façon, la technique de décodage selon l'invention permet de reconstruire soit une région de l'image correspondant à un macrobloc, soit une région de l'image correspondant à un grand bloc, c'est-à-dire regroupant plusieurs macroblocs.

Selon un aspect particulier, le procédé de décodage comprend une étape de reconstruction d'un macrobloc à partir d'au moins un macrobloc présent dans un grand bloc précédemment reconstruit.

De cette façon, il est possible de reconstruire un macrobloc courant en tenant compte de macroblocs précédemment reconstruits localisés dans une zone causale ou anticausale du macrobloc courant.

La zone causale d'un macrobloc est la zone de l'image comprenant les macroblocs situés avant le macrobloc courant, selon le sens de parcours des blocs dans l'image. La zone anti-causale d'un macrobloc est la zone de l'image comprenant les macroblocs situés après le macrobloc courant, selon le sens de parcours des blocs dans l'image.

Selon une caractéristique particulière, le raffinement est effectué selon un ordre de parcours prédéterminé des macroblocs.

Ainsi, le raffinement des macroblocs n'est pas nécessairement mis en œuvre pour tous les macroblocs présents dans un grand bloc, une fois que ce grand bloc est décodé. Ce raffinement peut être mis en œuvre selon un ordre de parcours prédéterminé des macroblocs, comme le sens « Raster Scan » ou « Spiral Scan » défini précédemment.

Dans un autre mode de réalisation, l'invention concerne un dispositif de décodage d'un signal représentatif d'une séquence d'images, comprenant :
- des moyens de lecture d'informations de codage de base associées à un grand bloc ;
- des moyens de décodage desdites informations de codage de base et de reconstruction dudit grand bloc ; et
- des moyens de décodage d'informations de rehaussement associées à au moins un macrobloc présent dans ledit grand bloc, si elles existent, et de raffinement dudit au moins un macrobloc.

Un tel dispositif de décodage est notamment adapté à mettre en œuvre le procédé de décodage décrit précédemment. Il s'agit par exemple d'un décodeur vidéo de type MPEG ou H.264, ou selon une future norme de compression vidéo.

L'invention concerne également un programme d'ordinateur comportant des instructions pour la mise en œuvre du procédé de codage et/ou du procédé de décodage décrit précédemment lorsque ce programme est exécuté par un processeur, ou un produit programme d'ordinateur téléchargeable depuis un réseau de communication et/ou stocké sur un support lisible par ordinateur et/ou exécutable par un processeur, comprenant des instructions de code de programme pour la mise en œuvre du procédé de codage et/ou du procédé de décodage décrit précédemment, lorsqu'il est exécuté par un processeur.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre les principales étapes d'un procédé de codage selon un mode de réalisation de l'invention ;
- les figures 2A et 2B illustrent un sens de parcours des macroblocs dans une image, et la construction d'un grand bloc ;
- les figures 3A à 3C présentent différentes partitions possibles pour un même bloc ;
- la figure 4 illustre le codage de macroblocs ou de grands blocs selon un mode de réalisation de l'invention ;
- les figures 5 et 6 présentent la syntaxe d'un flux selon un mode de réalisation de l'invention ;
- la figure 7 illustre les principales étapes d'un procédé de décodage selon un mode de réalisation de l'invention ;
- les figures 8 et 9 présentent respectivement la structure d'un dispositif de codage et d'un dispositif de décodage mettant en œuvre une technique codage et une technique de décodage selon un mode de réalisation particulier de l'invention.

### 5. Description d'un mode de réalisation de l'invention

### 5.1 Principe général

Le principe général de l'invention repose sur l'utilisation de blocs de taille adaptative selon les caractéristiques de la région d'une image à coder. Il est ainsi possible de définir des régions pour lesquelles on code un bloc de grande taille, et d'autres pour lesquelles on code un bloc de petite taille.

En effet, les inventeurs de la présente demande de brevet ont constaté que dans les régions homogènes d'une vidéo, un bloc de grande taille (par exemple 32x32 pixels ou plus) permet de capturer les principales caractéristiques de la région en minimisant le coût de syntaxe associée au codage de cette région. De même, l'étape de transformation sur un support plus grand permet une meilleure compaction de l'énergie. Cependant, l'utilisation de blocs de petite taille ou de taille moyenne reste nécessaire dans les zones non homogènes.

On entend par région homogène une région de même texture, ou de même mouvement par exemple. Ainsi, une zone homogène au sens du mouvement ou de la texture est une zone dont les pixels présentent des caractéristiques proches.

L'invention propose donc une solution nouvelle permettant d'adapter la taille d'un bloc à la région de l'image à laquelle il correspond. De plus, lorsque plusieurs macroblocs sont regroupés pour former un grand bloc, ce grand bloc est codé à deux niveaux :
- un premier niveau permettant de déterminer des informations de codage de base associées au grand bloc ;
- un deuxième niveau permettant de déterminer des informations de rehaussement associées à au moins un macrobloc du grand bloc.

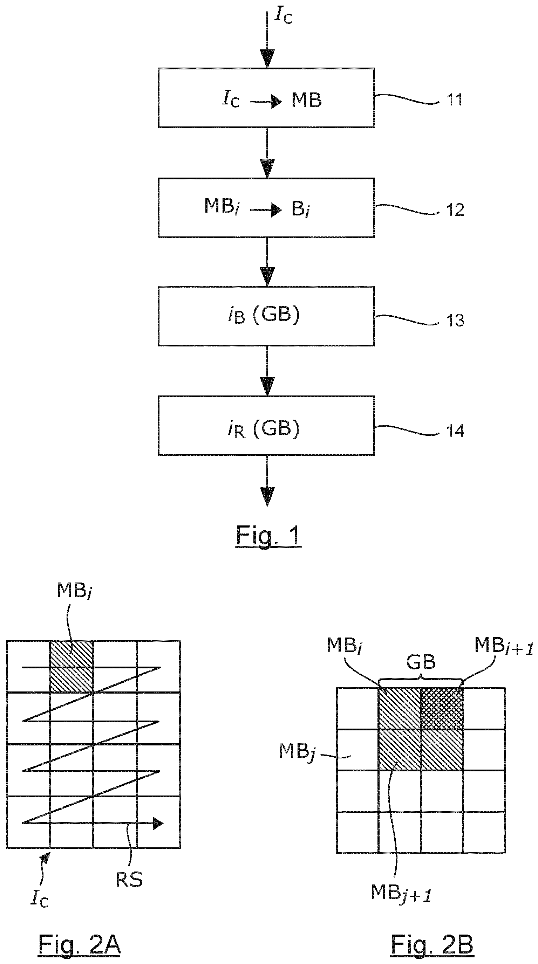

La figure 1 illustre plus précisément les étapes du procédé de codage selon l'invention.

Plus précisément, une image courante ***I***_{C} est découpée au cours d'une première étape 11 en blocs de taille standard, dits macroblocs.

Par exemple, selon la norme H.264/AVC, un macrobloc est un bloc carré de taille 16×16. Dans les normes à venir, un macrobloc pourra avoir une taille égale à 32x32, 64x64, ou 16x32 par exemple.

On considère que l'image courante *I*_{C} est parcourue macrobloc par macrobloc, selon le sens de parcours « Raster Scan », tel qu'illustré par la flèche RS en figure 2A.

Pour au moins un macrobloc de l'image courante *I*_{C}, noté MB*ᵢ*, le procédé met en œuvre une étape de construction 12 d'au moins un bloc B*ᵢ* de taille supérieure au macrobloc courant MB*ᵢ*, comprenant le macrobloc courant MB*ᵢ* et au moins un macrobloc voisin dans l'image *I*_{C}. De tels blocs présentent donc une taille supérieure aux macroblocs 16x16 utilisés selon la norme H.264/AVC. Par exemple, on construit un premier bloc B₁ de taille 16x32, un deuxième bloc B₂ de taille 32×16, un troisième bloc B₃ de taille 32x32.

Les macroblocs voisins peuvent être choisis dans la zone anti-causale du macrobloc courant MB*ᵢ*, c'est-à-dire dans la zone de l'image comprenant les macroblocs situés après le macrobloc MB*ᵢ*, selon le sens de parcours RS des macroblocs dans l'image. On s'assure de cette façon que chaque macrobloc n'est codé qu'une seule fois.

Les tailles possibles pour ces grands blocs sont prédéfinies en fonction de la taille des images à coder (selon des recommandations définies par un standard, ou bien spécifiées en entête des données codées).

Si plusieurs grands blocs sont construits pour le macrobloc, on en sélectionne un, comme expliqué par la suite.

Par exemple, on considère que c'est le bloc B₃ de taille 32x32 qui permet d'obtenir la meilleure valeur de reconstruction pour la zone considérée, c'est-à-dire la meilleure représentation de base. Ce bloc, appelé grand bloc GB par la suite, est illustré en figure 2B.

On code ce grand bloc au cours d'une étape de codage 13, de façon à obtenir des informations de codage de base *i*_{B} associées au grand bloc. Ces informations de codage de base comprennent au moins une information parmi :
- des informations relatives au mode de codage utilisé (mode intra, mode inter) ;
- des informations relatives au découpage éventuel du grand bloc (partitionnement) ;
- des informations de prédiction (mouvement pour un codage inter, mode de prédiction intra en mode intra), et résidu de prédiction.

Ensuite, au cours d'une étape suivante 14, des informations de rehaussement sont déterminées pour au moins un macrobloc présent dans un grand bloc. Par exemple, des informations de rehaussement sont déterminées pour le macrobloc MB_{*i*+*1*} présent dans le grand bloc GB.

Comme indiqué précédemment, la sélection d'un grand bloc parmi l'ensemble des blocs construits permet d'obtenir la meilleure représentation de base pour la région considérée.

Par exemple, une région de taille 32x32 peut être représentée par :
- deux grands blocs de taille 16x32, ou
- deux grands blocs de taille 32×16, ou
- un grand bloc de taille 32x32, ou
- quatre blocs de taille 16×16, ces blocs étant prédits classiquement comme un macrobloc MBi.

On détermine une représentation de base de chacun des blocs, et on compare les différentes représentations de base de la région 32x32 entre elles :
- les deux grands blocs de taille 16x32;
- les deux grands blocs de taille 32×16;
- le grand bloc de taille 32x32; et
- les quatre blocs de taille 16×16.

En effet, on doit comparer (critère débit/distorsion) les représentations de base sur une même zone (même nombre de pixels reconstruits), car le coût de codage associé au mode de prédiction pour un macrobloc codé par un grand bloc peut parfois être difficilement calculable si on compare le critère débit/distorsion pour les pixels du macrobloc uniquement alors que l'on a codé une région plus grande.

Si la meilleure représentation de base pour la région 32x32 est donnée par les quatre blocs de taille 16×16, alors on ne code que le macrobloc courant MBᵢ. Si la meilleure représentation pour la région 32x32 est donnée par les deux grands blocs horizontaux ou verticaux, on code le grand bloc contenant le macrobloc courant MBᵢ. Si la meilleure représentation pour la région 32x32 est donnée par le grand bloc de taille 32x32, on code le grand bloc de taille 32x32.

Le procédé de codage selon l'invention peut être mis en œuvre de diverses manières, notamment sous forme câblée ou sous forme logicielle.

### 5.2 Description détaillée du procédé de codage

On présente ci-après un mode de réalisation particulier du procédé de codage selon l'invention. On considère qu'on a déjà fixé la taille d'un grand bloc.

### A) Codage avec partitionnement du grand bloc

Afin de déterminer la meilleure représentation de base pour un macrobloc courant, on détermine plusieurs représentations de base (ou versions codées de premier niveau) pour les blocs de taille supérieure au macrobloc courant construits. Ces différentes représentations sont déterminées en fonction de différentes partitions des blocs de taille supérieure.

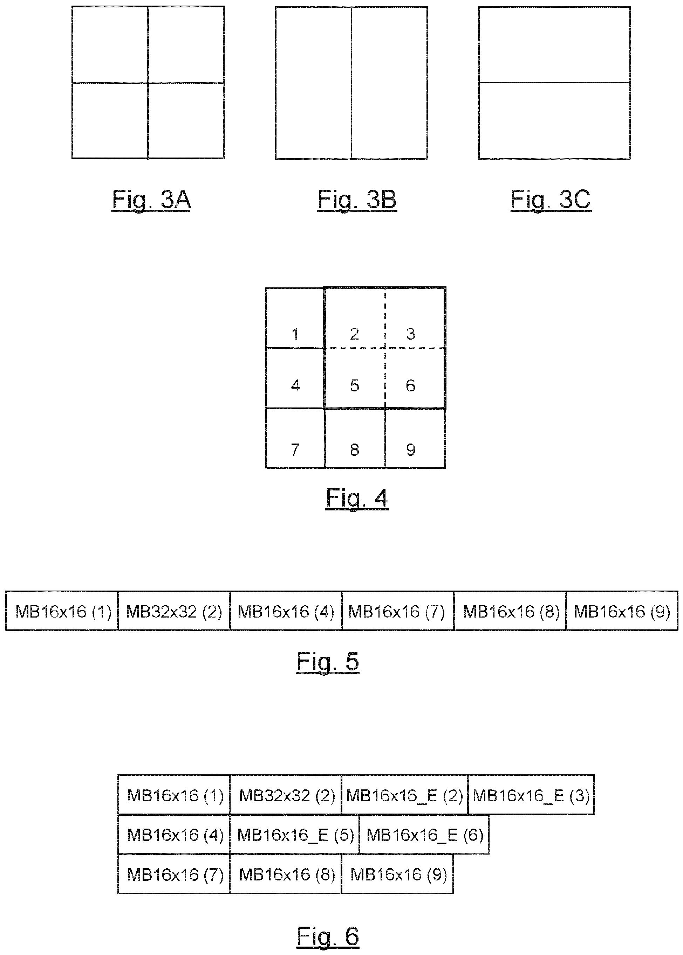

Ainsi, pour le codage d'un grand bloc, différents partitionnements peuvent être utilisés, tels que des partitionnements rectangulaires horizontaux, rectangulaires verticaux ou carrés, comme illustré en figures 3A à 3C.

Le partitionnement permet donc d'obtenir un ensemble de sous-blocs, qui ne sont pas nécessairement de la taille d'un macrobloc. Ces sous-blocs peuvent être de forme carrée, rectangulaire ou autre.

Afin de limiter le nombre de partitions associées à un macrobloc ou un bloc de taille supérieure, on considère par exemple qu'il est partitionné en utilisant une technique de découpage dyadique, mettant en œuvre une découpe régulière du bloc en deux, horizontalement (figure 3C) ou verticalement (figure 3B) ou une technique de type quadtree mettant en œuvre une découpe régulière du bloc en quatre blocs de taille identique (figure 3A).

Ce découpage peut être mis en œuvre de façon récursive jusqu'à obtenir un sous-bloc de taille 4 pixels sur une de ses dimensions verticale ou horizontale (la plus petite).

Par exemple, si un bloc de taille supérieure comprend une région de pixels blancs, et une région de pixels noirs, il est souhaitable de partitionner le bloc en deux sous-blocs, l'un correspondant à la région de pixels blancs, et l'autre correspondant à la région de pixels noirs, et de coder indépendamment les deux sous-blocs, plutôt que coder une valeur moyenne qui ne traduit pas le contraste.

### B) Modes de prédiction pour le codage du grand bloc

Les modes de prédiction pour le codage d'un bloc définis selon la norme H.264/AVC peuvent être étendus à ces différentes partitions.

Ainsi, en mode inter, les mécanismes définis selon la norme AVC peuvent être utilisés pour l'estimation et la compensation en mouvement. Ces mécanismes peuvent être appliqués sur des sous-blocs présentant une taille supérieure à la taille d'un macrobloc standard (16×16 selon la technique AVC).

Selon le partitionnement utilisé, un vecteur peut être utilisé pour compenser tout le grand bloc ou plusieurs vecteurs peuvent être utilisés pour chaque sous-bloc, similairement à la technique AVC.

En mode intra, de nouvelles prédiction sont possibles, et sont ajoutées aux prédictions classiques de la technique AVC grâce à l'ajout d'orientations supplémentaires dans la direction causale et dans la direction anti-causale.

En effet, la prédiction anti-causale est possible ici lorsque des macroblocs voisins ont déjà été codés à l'aide de grands blocs. Par exemple, en revenant à la figure 2B, le macrobloc MB*ⱼ* pourra être prédit en tenant compte du macrobloc suivant selon l'ordre de parcours (MB_{*j*+*1*}), puisque ce macrobloc a été codé lors de l'étape de codage du grand bloc.

Si plusieurs représentations de base offrent des performances proches, on privilégie celle obtenue à partir du bloc de plus grande taille. En effet, le codage d'un bloc de grande taille permet de limiter la quantité d'informations de codage de base insérées dans le flux (puisque les macroblocs présents dans un grand bloc ne sont pas codés individuellement en version de base), et accélère donc le traitement au décodage.

### C) Transformation du résidu de prédiction pour le codage d'un grand bloc

Une fois la meilleure représentation de base déterminée, le grand bloc correspondant est codé.

Classiquement, lorsque la prédiction d'un bloc est calculée, le résidu de prédiction est transformé afin de compacter l'énergie du signal sur un nombre plus faible de coefficients.

Avec l'utilisation d'un grand bloc, la transformation utilisée par AVC peut être étendue sur des supports plus grands. Ceci peut être fait par l'ajout de transformation DCT entière 16x16 ou 32x32, selon la taille des macroblocs standards, et de transformations ondelettes.

La technique dite RRU peut aussi être appliquée sur les grands blocs. Les résidus de prédiction sont alors sous-échantillonnés et transformés par une transformation 8x8 ou 4x4, par exemple. Au décodage, les coefficients reconstruits pourront être sur-échantillonnés avant l'ajout de la prédiction.

Les transformations classiques de type 4x4 ou 8x8 peuvent aussi être utilisées sur des grands blocs selon l'invention.

Pour chaque grand bloc, une information précisant le type de transformation effectuée est codée.

Si certains macroblocs sont codés individuellement, une information précisant le type de transformation effectuée est également codée pour ces macroblocs.

### D) Information de réhaussement pour un macrobloc

Par ailleurs, pour au moins un macrobloc d'un grand bloc, un raffinement du mouvement peut être codé, sous la forme d'un résidu calculé par prédiction par rapport à un mouvement de base codé pour le grand bloc.

En mode intra ou inter, pour au moins un macrobloc du grand bloc, un raffinement de texture peut également être codé, sous la forme d'un résidu de texture par prédiction par rapport à une texture de base codée pour le grand bloc.

### E) Codeur

On considère par exemple que l'invention est mise en œuvre dans un codeur classique H.264.

L'image courante est découpée en blocs de taille standard, dits macroblocs, de taille 16×16 si l'on se place dans le contexte d'un codeur H.264. L'unité de codage la plus grande est définie en fonction de la résolution de la séquence à coder par exemple.

Cette unité de codage maximale est de taille MxN, avec M et N multiples de 16 pixels. En effet, elle correspond à un bloc construit à partir d'au moins deux macroblocs de l'image courante.

Le parcours des macroblocs dans l'image est fait ligne par ligne (parcours « Raster Scan »). Le codage des macroblocs est déterminé par groupe de macroblocs, un groupe formant un grand bloc.

Pour un premier macrobloc de l'image selon le sens de parcours « Raster Scan » (dont le coin supérieur gauche est à la position (x0, y0)), on cherche à déterminer si les meilleures performances en termes de débit/distortion sont obtenues en codant directement ce macrobloc, ou en codant un bloc de taille supérieure comprenant ce macrobloc.

On teste pour ce faire différentes tailles de blocs. Par exemple, on teste un bloc de taille 16x32, un bloc de taille 32×16, un bloc de taille 32x32, etc, et pour chaque bloc de taille supérieure au macrobloc, on teste différentes partitions et différents modes de prédiction pour le codage de ce grand bloc. Les modes de prédiction pour une partition sont testés de manière similaire à ce qui se fait dans AVC, à savoir mode intra, mode inter ou mode « skip » si le bloc est reconstruit par simple prédiction (c'est-à-dire qu'il n'y a pas d'informations supplémentaires à transmettre), ainsi que les différentes tailles de transformation.

On sélectionne ensuite le grand bloc qui offre la meilleure représentation de base pour la région considérée.

On considère par exemple que c'est le grand bloc de taille M^{∗}×N^{∗} qui présente les meilleures performances. Les choix relatifs à ce grand bloc (notamment sa taille, son partitionnement et/ou le type de transformation utilisée) sont stockés, et des informations de codage de base associées au grand bloc sont déterminées par la suite.

Des informations de codage de base pour chaque macrobloc du grand bloc peuvent également être stockées pour être éventuellement insérées plus tard dans le flux. En particulier, il est possible de déterminer et de stocker des informations de rehaussement associées au macrobloc présent dans le grand bloc. Le codeur passe alors au macrobloc suivant, positionné à la position (x0+M^{∗}, y0).

Si la meilleure représentation de base du premier macrobloc est obtenue à partir du premier macrobloc individuellement (isolément), la taille de ce bloc est stockée, et des informations de codage de base associées au macrobloc sont déterminées par la suite. Le codeur passe alors au macrobloc suivant, positionné à la position (x0+16, y0).

Le codeur effectue ainsi un codage de toute l'image en cherchant à chaque fois la meilleure combinaison possible de macroblocs pour le codage.

Le signal représentatif de la séquence d'image (encore appelé flux) est ensuite construit en codant pour chaque macrobloc de l'image, selon un sens de parcours prédéterminé, les données sauvegardées de la meilleure représentation de base. Lorsque la meilleure représentation de base d'un macrobloc est obtenue à partir d'un grand bloc, les données pour ce grand bloc sont insérées dans le flux, sous la forme d'informations de codage de base associées au grand bloc. Lorsque la meilleure représentation de base pour un macrobloc est obtenue à partir du codage macrobloc pris isolément, les données pour ce macrobloc sont insérées dans le flux, sous la forme d'informations de codage de base associées au macrobloc.

Par exemple, comme illustré en figure 4, on considère une image (ou portion d'image) découpée en neuf macroblocs de taille 16×16 numérotés de 1 à 9 selon l'ordre de parcours « Raster Scan ». On parcourt l'image macrobloc par macrobloc.

Lorsque le macrobloc courant est le macrobloc 1, on considère que la meilleure représentation de base est obtenue à partir du codage du macrobloc 1 pris individuellement. On stocke cette valeur et on passe au macrobloc suivant qui n'a pas été précédemment codé, seul ou dans un grand bloc, selon l'ordre de parcours des macroblocs. Il s'agit du macrobloc 2.

Lorsque le macrobloc courant est le macrobloc 2, la meilleure représentation de base est obtenue à partir du codage du grand bloc de taille 32x32, comprenant les macroblocs 2, 3, 5 et 6. On stocke cette valeur et on passe au macrobloc suivant qui n'a pas été précédemment codé. Il s'agit du macrobloc 4.

Lorsque le macrobloc courant est le macrobloc 4, la meilleure représentation de base est obtenue à partir du macrobloc 4. On stocke cette valeur et on passe au macrobloc suivant qui n'a pas été précédemment codé. Il s'agit du macrobloc 7. Et ainsi de suite.

Ainsi, selon cet exemple, la meilleure représentation de base des macroblocs 1, 4, 7, 8 et 9 respectivement est obtenue à partir des macroblocs 1, 4, 7, 8 et 9, et la meilleure représentation de base du macrobloc 2 est obtenue à partir d'un grand bloc de taille 32x32, comprenant les macroblocs 2, 3, 5 et 6.

Le signal comprend donc les données suivantes, dans l'ordre suivant :
- informations de codage de base associées au macrobloc 1 (MB 16×16 (1)) ;
- informations de codage de base associées au grand bloc comprenant les macroblocs 2, 3, 5, et 6 (MB 32x32 (2)) ;
- informations de codage de base associées au macrobloc 4 (MB 16×16 (4)) ;
- informations de codage de base associées au macrobloc 7 (MB 16×16 (7)) ;
- informations de codage de base associées au macrobloc 8 (MB 16×16 (8)) ;
- informations de codage de base associées au macrobloc 9 (MB 16×16 (9)).

La figure 5 illustre plus précisément la syntaxe d'un tel flux.

On constate ainsi que les macroblocs 3, 5, et 6 ne sont pas codés individuellement dans leur version de base (c'est-à-dire ne font pas apparaître d'information de codage de base spécifique). Autrement dit, la meilleure représentation de base du macrobloc 2 courant étant obtenue à partir du grand bloc de taille 32x32 comprenant les macroblocs 2, 3, 5 et 6, on saute les macroblocs 3, 5, et 6 lors du parcours des macroblocs de l'image, et aucune information de codage de base supplémentaire n'est codée pour les macroblocs voisins (macroblocs 3, 5 et 6) situés dans la zone reconstruite par le macrobloc courant (macrobloc 2).

Ceci permet de simplifier le codage d'une grande zone de l'image, en limitant le nombre de données codées.

Par ailleurs, pour un ou plusieurs macroblocs de la zone reconstruite par un grand bloc, une information de rehaussement de texture et/ou de mouvement peut être codée, afin d'améliorer la qualité de ces macroblocs. Les informations de rehaussement sont alors codées à la suite des informations de codage de base du grand bloc, sous la forme de résidus et dans l'ordre de parcours des macroblocs utilisé.

La figure 6 illustre plus précisément la syntaxe associée au flux comprenant des informations de rehaussement pour les macroblocs du grand bloc 32x32 de l'exemple de la figure 4, en considérant que des informations de rehaussement sont codées pour chaque macrobloc 2, 3, 5 et 6.

Comme illustré en figure 6, le signal comprend alors les données suivantes, dans l'ordre suivant :
- informations de codage de base associées au macrobloc 1 (MB 16×16 (1)) ;
- informations de codage de base associées au grand bloc comprenant les macroblocs 2, 3, 5, et 6 (MB 32x32 (2)) ;
- informations de rehaussement associées au macrobloc 2 (MB16×16_E (2)) ;
- informations de rehaussement associées au macrobloc 3 (MB16×16_E (3)) ;
- informations de codage de base associées au macrobloc 4 (MB 16×16 (4)) ;
- informations de rehaussement associées au macrobloc 5 (MB 16x16_E (5)) ;
- informations de rehaussement associées au macrobloc 6 (MB 16×16_E (6)) ;
- informations de codage de base associées au macrobloc 7 (MB 16×16 (7)) ;
- informations de codage de base associées au macrobloc 8 (MB 16×16 (8)) ;
- informations de codage de base associées au macrobloc 9 (MB 16×16 (9)).

On note que les informations de rehaussement associées à un macrobloc d'un grand bloc sont insérées selon l'ordre de parcours des macroblocs de l'image. Elles se retrouvent donc mêlées aux informations de codage de base associées au grand bloc, et aux informations de codage de base associées aux autres macroblocs, selon l'ordre de parcours des macroblocs de l'image.

### 5.3 Modification de la syntaxe

On présente ci-après des exemples de modification de syntaxe pour un schéma de compression basé AVC.

On considère que les images d'une séquence sont découpées en tranches (« slices » en anglais), qui sont ensuite subdivisées en macroblocs.

### A) Syntaxe de l'en-tête « slice header syntax »

L'en-tête d'une slice est modifiée afin de signaler la présence ou non d'information de rehaussement.

En d'autres termes, un indicateur est prévu pour signaler la présence d'informations de rehaussement associées à au moins un macrobloc présent dans un grand bloc. Par exemple, un drapeau « extra_macroblock_flag » est inséré dans l'en-tête pour signaler la présence d'information de rehaussement pour un ou plusieurs macroblocs déjà codés via un grand bloc dans la version de base (c'est-à-dire pour lesquels des informations de codage de base ont déjà été déterminées).

L'annexe A, qui fait partie intégrante de la présente description, propose un exemple de syntaxe de l'en-tête correspondant à une slice, dans laquelle l'indicateur « extra_macroblock_flag » inséré dans le flux selon l'invention figure en italique. La sémantique associée à cette syntaxe est plus précisément décrite dans le standard H.264/AVC.

### B) Syntaxe de la partie utile « slice data syntax »

L'annexe B, qui fait également partie intégrante de la présente description, propose un exemple de syntaxe de la partie utile comprenant les informations relatives à une slice (information de codage de base et éventuellement de rehaussement), dans laquelle les éléments insérés dans le flux selon l'invention figurent en italique. L'élément barré correspond à une ligne de la syntaxe existante selon la norme H.264, qui a été modifiée selon l'invention.

La sémantique associée à cette syntaxe est plus précisément décrite dans le standard H.264/AVC, et notamment dans la recommandation ITU-T H.264 (section 7, plus précisément 7.3 pour la syntaxe et 7.4 pour la sémantique).

Plus précisément, selon cet exemple d'implémentation, on met en œuvre les étapes suivantes macrobloc par macrobloc, selon l'ordre de parcours de codage des macroblocs :
- on vient tout d'abord tester si le macrobloc courant a déjà été codé (c'est-à-dire, si on a déjà obtenu des informations de codage de base pour ce macrobloc), en utilisant par exemple une fonction nommée « macroblock_coded » ;
- si le macrobloc courant n'a pas déjà été codé :
   o on insère un indicateur permettant de signaler la présence ou non d'un bloc de taille supérieure à celle d'un macrobloc, pour ce macrobloc courant (drapeau « super_bloc_flag ») ;
      ▪ si on construit un grand bloc, on code le grand bloc et on obtient des informations de codage de base associées au grand bloc (en utilisant par exemple une fonction nommée « super_bloc_layer ») ;
      ▪ sinon, on code le macrobloc courant de façon classique et on obtient des informations de codage de base associées au macrobloc (en utilisant par exemple la fonction « macroblock_layer ») ;
- sinon si le macrobloc courant a déjà été codé (i.e. via un grand bloc qui le recouvre), on regarde si on peut coder des informations de rehaussement supplémentaires pour ce macrobloc (en tenant compte de la valeur d'un indicateur « extra_macrobloc_flag » codé au niveau de l'entête de slice par exemple). Si c'est le cas (par exemple si « extra_macroblock_flag==1 »), on code alors les informations de rehaussement associées au macrobloc courant (en appelant la fonction « macrobloc_enhancement_layer »).

Les fonctions nommées « super_bloc_layer », « macrobloc_enhancement_ layer » et « macroblock_coded » fonctionnent de la manière suivante :
- la fonction super_bloc_layer est similaire dans son principe à la fonction macrobloc_layer de H.264 : elle définit les paramètres de représentation lié à un codage prédictif d'un bloc à l'aide d'une prédiction intra ou inter, avec un découpage éventuel, et utilisant transformation et quantification du résidu de prédiction ;
- la fonction macrobloc_enhancement définit les paramètres de réhaussement (par exemple résidu de mouvement, résidu de texture) à apporter sur les informations de représentation de base similairement à ce qui est réalisé par l'extension SVC de AVC ;
- la fonction macrobloc_coded contrôle l'état d'information d'existence d'une représentation de base préalablement définie pour un macrobloc. Cette opération est effectuée via l'état des valeurs d'une carte d'information de définition des macroblocs disposant d'une représentation de base. Cette carte d'information est mise à jour lors du codage d'un grand boc dans le traitement de décodage associé à la fonction super_bloc_layer.

On remarque que selon cette syntaxe, il est possible d'insérer un indicateur spécifiant qu'il n'y a pas de rehaussement à coder pour au moins un macrobloc d'un grand bloc, grâce à la fonction « super_bloc_layer ». Dans ce cas, la fonction « macroblock_enhancement_layer » n'a pas d'effet sur le macrobloc considéré.

### 5.4 Description détaillée du procédé de décodage

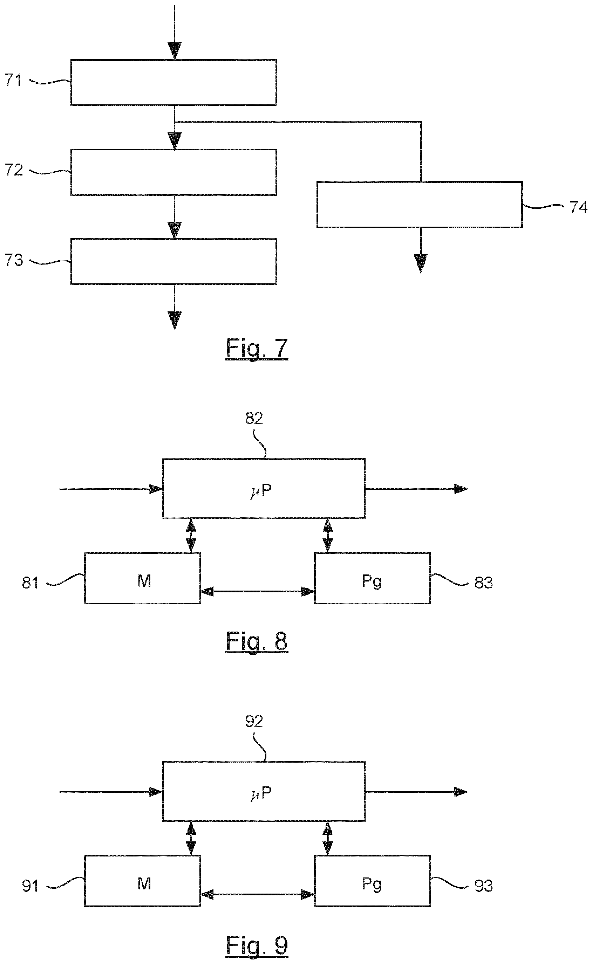

On présente désormais, en relation avec la figure 7, les principales étapes du procédé de décodage selon un mode de réalisation de l'invention.

A réception d'un signal représentatif d'une séquence d'images codées selon l'invention, comprenant des informations de codage de base associées à un ou plusieurs grand bloc, et des informations de rehaussement associées à au moins un macrobloc présent dans un des grands blocs, un décodeur met en œuvre les étapes suivantes :
- lecture 71 d'informations de codage de base associées à un grand bloc :
- décodage 72 des informations de codage de base et reconstruction du grand bloc ;
- décodage 73 des informations de rehaussement associées aux macroblocs du grand bloc, si elles existent, et raffinement associé d'au moins un macrobloc présent dans le grand bloc.

Une étape supplémentaire de décodage 74 des informations de codage de base associées à un macrobloc et reconstruction du macrobloc peut également être prévue, si le signal reçu porte des informations de codage de base associées à un ou plusieurs macroblocs.

Le procédé de décodage selon l'invention peut être mis en œuvre de diverses manières, notamment sous forme câblée ou sous forme logicielle.

Selon un exemple d'implémentation, le décodeur lit les informations du flux pour l'image à décoder macrobloc par macrobloc, et stocke les informations pour chaque macrobloc.

Lors de la lecture des informations dans le flux, si un macrobloc courant est codé par un grand bloc, le décodeur lit les informations de codage de base associées au grand bloc. En revanche, il ne lit pas d'informations de codage de base associées aux autres macroblocs présents dans le grand bloc, c'est-à-dire les macroblocs voisins horizontaux et/ou verticaux du macrobloc courant. Si des informations de rehaussement sont présentes pour un ou plusieurs macroblocs du grand bloc, ces informations sont lues et stockées.

Plus précisément, lors de la lecture des informations associées à un macrobloc, le nombre de coefficients de codage de base à lire pour ce macrobloc est déterminé par la taille du grand bloc, son partitionnement et le type de transformation utilisé. Ces trois informations sont lues dans le flux ou déduites d'informations de codage de base précédemment lues.

Un macrobloc ou un grand bloc est ensuite reconstruit de manière classique à l'aide du décodage entropique des coefficients, quantification inverse et transformation inverse. Une prédiction est ensuite calculée pour le macrobloc ou le grand bloc, et ajoutée au résidu reconstruit. La zone de l'image correspondant au macrobloc ou au grand bloc est alors reconstruite.

### 5.5 Structure des dispositifs de codage et de décodage

On présente finalement, en relation avec les figures 8 et 9, la structure simplifiée d'un codeur et d'un décodeur mettant respectivement en œuvre une technique de codage d'une séquence d'images et une technique de décodage selon le mode de réalisation particulier décrit ci-dessus.

Un tel codeur comprend une mémoire 81 comprenant une mémoire tampon, une unité de traitement 82, équipée par exemple d'un microprocesseur *µ*P, et pilotée par le programme d'ordinateur 83, mettant en œuvre le procédé de codage selon un mode de réalisation de l'invention.

A l'initialisation, les instructions de code du programme d'ordinateur 83 sont par exemple chargées dans une mémoire RAM avant d'être exécutées par le processeur de l'unité de traitement 82. L'unité de traitement 82 reçoit en entrée une ou plusieurs images d'une séquence à coder. Le microprocesseur de l'unité de traitement 82 met en œuvre les étapes du procédé de codage décrit précédemment, selon les instructions du programme d'ordinateur 83, pour coder la ou les images dans un signal. Pour cela, le codeur comprend, outre la mémoire tampon 81, des moyens de découpage d'une image en blocs de taille standard, dits macroblocs, des moyens de construction d'au moins un bloc de taille supérieure à un macrobloc courant, des moyens de codage d'un grand bloc et des moyens de détermination d'informations de rehaussement associées à au moins un macrobloc présent dans le grand bloc. Ces moyens sont pilotés par le microprocesseur de l'unité de traitement 82.

Le décodeur illustré en figure 9 comprend une mémoire 91 comprenant une mémoire tampon, une unité de traitement 92, équipée par exemple d'un microprocesseur *µ*P, et pilotée par le programme d'ordinateur 93, mettant en œuvre le procédé de décodage selon un mode de réalisation de l'invention.

A l'initialisation, les instructions de code du programme d'ordinateur 93 sont par exemple chargées dans une mémoire RAM avant d'être exécutées par le processeur de l'unité de traitement 92. L'unité de traitement 92 reçoit en entrée un signal représentatif d'une séquence d'images. Le microprocesseur de l'unité de traitement 92 met en œuvre les étapes du procédé de décodage décrit précédemment, selon les instructions du programme d'ordinateur 93, pour décoder le signal et reconstruire la ou les images de la séquence. Pour cela, le décodeur comprend, outre la mémoire tampon 91, des moyens de lecture d'informations de codage de base, des moyens de décodage des informations de codage de base et de reconstruction du grand bloc, et des moyens de décodage d'informations de rehaussement associées à un grand bloc et de raffinement d'au moins un macrobloc présent dans le grand bloc. Ces moyens sont pilotés par le microprocesseur de l'unité de traitement 92.

### ANNEXE A

| | | |
|---|---|---|
| slice_header( ) { | **C** | **Descriptor** |
| **first_mb_in_slice** | 2 | ue(v) |
| **slice_type** | 2 | ue(v) |
| **pic_parameterset_id** | 2 | ue(v) |
| ***extra_macroblock_flag*** | 2 | *u*(*l*) |
| if( separate_colour_plane_flag =**=** 1 ) | | |
| **colour_plane_id** | 2 | u(2) |
| **frame num** | 2 | u(v) |
| if( !frame_mbs_only_flag ) { | | |
| **field_pic_flag** | 2 | *u*(*l*) |
| if( field_pic_flag ) | | |
| **bottom_field_flag** | 2 | *u*(*l*) |
| } | | |
| if( nal_unit_type = = 5 ) | | |
| **idr**_**pic**_**id** | 2 | ue(v) |
| if( pic_order_cnt_type = = 0 ) { | | |
| **pic_order_cnt_lsb** | 2 | u(v) |
| if( pic_order_present_flag && !field_pic_flag ) | | |
| **delta_pic_order_cnt_bottom** | 2 | se(v) |
| } | | |
| if( pic_order_cnt_type = = 1 && !delta_pic_order_always_zero_flag ) { | | |
| **delta_pic_order_cnt[ 0 ]** | 2 | se(v) |
| if( pic_order_present_flag && !field_pic_flag ) | | |
| **delta_pic_order_cnt[ 1 ]** | 2 | se(v) |
| } | | |
| if( redundant_pic_cnt_present_flag ) | | |
| **redundant_pic_cnt** | 2 | ue(v) |
| if( slice_type = = B ) | | |
| **direct_spatial_mv_pred_flag** | 2 | *u*(*l*) |
| if( slice_type = = P ∥ slice_type = = SP ∥ slice_type == B ) { | | |
| **num_ref_idx_active_override_flag** | 2 | *u*(*l*) |
| if( num_ref_idx_active_override_flag ) { | | |
| **num_ref_idx_l0_active_minus1** | 2 | ue(v) |
| if( slice_type = = B ) | | |
| **num_ref_idx_l1_active_minus1** | 2 | ue(v) |
| } | | |
| } | | |
| ref_pic_list_reordering( ) | 2 | |
| if( ( weighted_pred_flag && ( slice_type = = P ∥ slice_type = = SP ) ) ∥ ( weighted_bipred_idc = = 1 && slice_type == B ) ) | | |
| pred_weight_table( ) | 2 | |
| if( nal_ref_idc != 0 ) | | |
| dec_ref_pic_marking( ) | 2 | |
| if( entropy_coding_mode_flag && slice_type != I && slice_type != SI ) | | |
| **cabac_init_idc** | 2 | ue(v) |
| **slice_qp_delta** | 2 | se(v) |
| if( slice_type = = SP ∥ slice_type = = SI ) { | | |
| if( slice_type = = SP ) | | |
| **sp_for_switch_flag** | 2 | *u*(*l*) |
| **slice-qs_delta** | 2 | se(v) |
| } | | |
| if( deblocking_filter_control_present_flag ) { | | |
| **disable_deblocking_filter_idc** | 2 | ue(v) |
| if( disable_deblocking_filter_idc != 1 ) { | | |
| **slice_alpha_c0_offset_div2** | 2 | se(v) |
| **slice_beta_offset_div2** | 2 | se(v) |
| } | | |
| } | | |
| if( num slice_groups_minus1 > 0 && slice_group_map_type >= 3 && slice_group_map_type <= 5) | | |
| **slice_group_change_cycle** | 2 | u(v) |
| } | | |

### ANNEXE B

| | | |
|---|---|---|
| slice_data( ) { | **C** | **Descriptor** |
| if( entropy_coding_mode_flag ) | | |
| while( !byte_aligned( ) ) | | |
| **cabac_alignment_one_bit** | 2 | f(1) |
| CurrMbAddr = first_mb_in_slice ^{∗} ( 1 + MbaffFrameFlag ) | | |
| moreDataFlag = 1 | | |
| prevMbSkipped = 0 | | |
| do { | | |
| if( slice_type != I && slice_type != SI ) | | |
| if( !entropy_coding_mode_flag ) { | | |
| **mb_skip_run** | 2 | ue(v) |
| prevMbSkipped = ( mb_skip_run > 0 ) | | |
| for( i=0; i<mb_skip_run; i++ ) | | |
| CurrMbAddr = NextMbAddress( CurrMbAddr ) | | |
| moreDataFlag = more_rbsp_data( ) | | |
| } else { | | |
| **mb_skip_flag** | 2 | ae(v) |
| moreDataFlag = !mb_skip_flag | | |
| } | | |
| if( moreDataFlag ) { | | |
| if( MbaffFrameFlag && ( CurrMbAddr % 2 = = 0 ∥ ( CurrMbAddr % 2 = = 1 && prevMbSkipped ) ) ) | | |
| **mb₋field-decoding_flag** | 2 | *u*(*l*) \| ae(v) |
| *if( !macroblock_coded( ) ) {* | | |
| ***super_bloc_flag*** | 2 | *u*(*l*) |
| *if( super_bloc_flag )* | | |
| *Super_bloc_layer( )* | | |
| *Else* | | |
| *macroblock_layer( )* | *2* \| *3* \| *4* | |
| *} else {* | | |
| *if( extra_macroblock_flag )* | | |
| *macroblock*_*enhancement_layer( )* | | |
| } | | |
| | | |
| } | | |
| if( !entropy_coding_mode_flag ) | | |
| moreDataFlag = more_rbsp_data( ) | | |
| else { | | |
| if( slice_type != I && slice_type != SI ) | | |
| prevMbSkipped = mb_skip_flag | | |
| if( MbaffFrameFlag && CurrMbAddr % 2 = = 0 ) | | |
| moreDataFlag = 1 | | |
| else { | | |
| **end_of_slice_flag** | 2 | ae(v) |
| moreDataFlag = !end_of_slice_flag | | |
| } | | |
| } | | |
| CurrMbAddr = NextMbAddress( CurrMbAddr ) | | |
| } while( moreDataFlag ) | | |
| } | | |

## Revendications

1. Procédé de décodage d'un signal représentatif d'une séquence d'images, une image étant découpée en tranches subdivisées en blocs de taille standard, dits macroblocs, ledit signal comprenant des informations de codage de base associées à au moins un grand bloc permettant de reconstruire une couche de base d'une image courante, un grand bloc correspondant à un groupe de macroblocs,
**caractérisé en ce que** ledit procédé met en œuvre les étapes suivantes :
- décodage d'un indicateur positionné dans un en-tête d'une tranche de ladite image,
- lecture (71) d'informations de codage de base associées à un grand bloc de ladite tranche ;
- décodage (72) desdites informations de codage de base et reconstruction dudit grand bloc ;
- en fonction d'une valeur de l'indicateur décodé, décodage (73) d'informations de rehaussement contenues dans ledit signal et associées à au moins un macrobloc présent dans ledit grand bloc, et raffinement dudit au moins un macrobloc.

2. Procédé de décodage selon la revendication 1, **caractérisé en ce que** les informations de rehaussement sont décodées à la suite des informations de codage de base du grand bloc, sous la forme de résidus et dans un ordre de parcours prédéterminé des macroblocs du grand bloc.

3. Procédé de décodage selon la revendication 1, **caractérisé en ce qu'**il comprend une étape de reconstruction d'un macrobloc à partir d'au moins un macrobloc présent dans un grand bloc précédemment reconstruit.

4. Procédé de décodage selon la revendication 1, **caractérisé en ce que** ledit raffinement est effectué selon un ordre de parcours prédéterminé desdits macroblocs.

5. Procédé de décodage selon l'une quelconque des revendications 1 à 4, **caractérisé en ce qu'**il comprend le décodage d'un indicateur signalant la présence dudit grand bloc dans ladite image.

6. Programme d'ordinateur comportant des instructions pour la mise en œuvre du procédé de décodage selon l'une quelconque des revendications 1 à 5, lorsque ce programme est exécuté par un processeur.

7. Support d'informations lisible par un ordinateur, comportant des instructions d'un programme d'ordinateur selon la revendication 6.

8. Dispositif de décodage d'un signal représentatif d'une séquence d'images, une image étant découpée en tranches subdivisées en blocs de taille standard, dits macroblocs, ledit signal comprenant des informations de codage de base associées à au moins un grand bloc permettant de reconstruire une couche de base d'une image courante, un grand bloc correspondant à un groupe de macroblocs,
**caractérisé en ce que** ledit dispositif est configuré pour :
- décoder un indicateur positionné dans un en-tête d'une tranche de ladite image,
- lire des informations de codage de base associées à un grand bloc de ladite tranche ;
- décoder lesdites informations de codage de base et reconstruire ledit grand bloc ;
- en fonction d'une valeur de l'indicateur décodé, décoder des informations de rehaussement contenues dans ledit signal et associées à au moins un macrobloc présent dans ledit grand bloc, et raffiner ledit au moins un macrobloc.
